# EUROPÄISCHE PATENTSCHRIFT

(11) **EP 2 837 896 B1**
(45) Veröffentlichungstag und Bekanntmachung des Hinweises auf die Patenterteilung: **20.12.2017**
(21) Anmeldenummer: 14179977.5
(22) Anmeldetag: 06.08.2014
(51) Int. Cl.: F24F 3/14, F24F 6/14

(54) **Luftbefeuchtungsanordnung und Verfahren zum Befeuchten eines Luftstroms**
Air humidification assembly and method for humidifying an air flow
Système d'humidification de l'air et procédé destiné à humidifier un flux d'air

(30) Priorität: 14.08.2013 DE 102013216083
(43) Veröffentlichungstag der Anmeldung: 18.02.2015
(73) Patentinhaber: ES Vertrieb und Service GmbH, 89081 Ulm (DE)
(72) Erfinder: Eggers, Dirk, 89134 Blaustein (DE); Korte, Dieter, 89081 Ulm (DE)
(74) Vertreter: Knoblauch, Andreas

(56) Entgegenhaltungen:
- DE-A1- 10 105 397
- US-A- 4 290 274
- US-A- 4 367 787
- US-A- 5 620 503
- US-B1- 6 387 165

## Beschreibung

Die Erfindung betrifft eine Luftbefeuchtungsanordnung mit einer Befeuchterstrecke, einer Luftstromerzeugungseinrichtung zur Erzeugung eines Luftstroms durch die Befeuchterstrecke, einer im Bereich der Befeuchterstrecke angeordneten Düsenanordnung, einer Flüssigkeitsversorgungseinrichtung, die mit der Düsenanordnung verbunden ist, und einer Steuereinrichtung, die eine Versorgung der Düsenanordnung mit Flüssigkeit steuert, wobei die Düsenanordnung mindestens zwei Sprühgruppen mit jeweils mindestens einer Düse aufweist und jede Sprühgruppe individuell ansteuerbar ist.

Ferner betrifft die Erfindung ein Verfahren zum Befeuchten eines Luftstroms, bei dem eine durch eine Düsenanordnung zerstäubte Flüssigkeit in den Luftstrom eingebracht wird, wobei eine Düsenanordnung mit mindestens zwei Sprühgruppe, die jeweils mindestens eine Düse aufweisen, verwendet wird und die Sprühgruppen in Abhängigkeit von der gewünschten Feuchte des Luftstroms individuell angesteuert werden.

Eine derartige Luftbefeuchtungsanordnung und ein derartiges Verfahren zum Befeuchten eines Luftstroms sind aus US 4 367 787 A bekannt. Hier sind mehrere Düsen vorgesehen, von denen jede mit einem eigenen Ventil gesteuert werden kann.

Eine weitere Luftbefeuchtungsanordnung und ein weiteres Verfahren zum Befeuchten eines Luftstroms sind aus EP 1 600 703 B1 bekannt. Die Flüssigkeit wird hier mit relativ hohem Druck durch die Düsen zu einem Aerosol zerstäubt, das in dem Luftstrom zum größten Teil verdunsten soll. Die Ausbringungsmenge des Befeuchtungsfluids ist über den Druck des Befeuchtungsfluids oder über Durchflusssteuereinrichtungen, wie beispielsweise Ventile, steuer- bzw. regelbar. Die Flüssigkeitsversorgungseinrichtung ist durch eine Hochdruckpumpe gebildet, die stufenlos regulierbar ist.

Die Befeuchtung eines Luftstroms kann zu verschiedenen Zwecken eingesetzt werden. Eine mögliche Anwendung ist die Befeuchtung von Zuluft, um eine bestimmte Luftfeuchte in einem Raum oder einem Gebäude zu erzielen und aufrecht zu erhalten. Eine andere Anwendung ist die adiabate Kühlung von Luft, bei der man eine Temperaturabsenkung durch das Verdunsten der eingesprühten Flüssigkeit bewirkt.

In beiden Fällen möchte man eine möglichst genaue Steuerung der in den Luftstrom eingesprühten Flüssigkeitsmenge erreichen.

US 5 620 503 A zeigt einen Luftbefeuchter und ein Verfahren zur Befeuchtung von Luft. Hier sind mehrere Sprühgruppen mit einer oder mehreren Düsen vorgesehen. Die Sprühgruppen sind einzeln über Aktuatoren ansteuerbar.

DE 101 05 397 A1 zeigt eine Ansteuerung bei Luftbefeuchtern mit Nachverdunster. Durch einen Kanal strömende Luft wird mit Hilfe einer Matrix von Düsen, die in Reihen und Spalten angeordnet sind und die einzeln oder in Gruppen von einer Prozesssteuerung über Magnetventile angesteuert werden, befeuchtet. Dabei wird zu jedem Zeitpunkt nur eine solche Anzahl von Düsen mittels der Magnetventile angesteuert, wie dies der berechneten Befeuchtungsleistung entspricht.

DE 4 209 274 A zeigt eine Kühlschlange eines Kältemittelkreislaufs einer Klimaanlage, die mit einem Luftstrom beaufschlagt wird. Am Anfang der Kühlschlange kann Wasser durch eine einzelne Düse aufgesprüht werden. Die Düse ist über ein pulsbreitengesteuertes Ventil mit einer Wasserzufuhr verbunden.

US 6 387 165 B1 zeigt eine Vorrichtung zum Entfernen von Luftverunreinigungen mit mehreren Wasserdüsen, die jeweils über Pumpen versorgt werden.

Der Erfindung liegt die Aufgabe zugrunde, die Luftfeuchte des Luftstroms möglichst genau zu steuern.

Diese Aufgabe wird bei einer Luftbefeuchtungseinrichtung der eingangs genannten Art dadurch gelöst, dass die Düsen pulsbreitenmoduliert gesteuert sind.

Mit dieser Ausbildung hat man zwei Einflussfaktoren, um die in den Luftstrom eingespeiste Flüssigkeitsmenge zu steuern. Es ist zum einen möglich, eine einzelne Sprühgruppe oder mehrere Sprühgruppen zusammen zu verwenden, um Flüssigkeit in den Luftstrom auszugeben. Es ist bei der Ausgabe der Flüssigkeit in den Luftstrom zum anderen möglich, die Ausgabe der Flüssigkeit nach einem Pulsbreitenmodulationsverfahren zu steuern. Ein derartiges Verfahren beruht darauf, dass man innerhalb eines vorgegebenen Zeitraumes, der auch als "Takt" bezeichnet wird, die Flüssigkeit nur während eines Teils dieses Taktes ausgibt, wobei die Länge dieses Teils veränderbar ist. Die Länge dieses Teils kann beispielsweise von 10 % bis 100 % des Taktes reichen. Dementsprechend hat man zwei Einflussmöglichkeiten zur Steuerung der ausgegebenen Flüssigkeitsmenge, die zusammen erlauben, die Ausgabemenge sehr fein abgestuft zu steuern. Insgesamt ergibt sich damit die Möglichkeit, die ausgegebene Flüssigkeitsmenge und damit auch die Luftfeuchte sehr genau zu steuern.

Vorzugsweise weisen mindestens zwei Sprühgruppen unterschiedliche Sprühleistungen auf. Damit steht eine weitere Möglichkeit zur Verfügung, die ausgegebene Flüssigkeitsmenge zu beeinflussen. Wenn nur eine kleine Flüssigkeitsmenge benötigt wird, wird eine Sprühgruppe mit einer kleinen Sprühleistung, also mit einer kleinen maximal ausgebbaren Flüssigkeitsmenge, verwendet. Wenn eine größere Flüssigkeitsmenge benötigt wird, dann wird eine Sprühgruppe mit einer größeren Sprühleistung verwendet. Wenn die maximale Feuchtigkeitsmenge verwendet wird, kann man die beiden genannten Sprühgruppen zusammen verwenden. Wenn mehr als zwei Sprühgruppen vorgesehen sind, kann man die Abstufung natürlich entsprechend feiner wählen. Insbesondere in der Kombination mit der Pulsbreitenmodulation der Düsensteuerung ist es von Vorteil, wenn man bereits die Sprühleistung der Düsengruppe bedarfsabhängig wählen kann. In diesem Fall kann man die Pulsbreitenmodulation so steuern, dass ein relativ großer Anteil des Taktes verwendet wird, um Flüssigkeit auszugeben.

Vorzugsweise steuert die Steuereinrichtung mindestens zwei Düsen zu unterschiedlichen Zeiten an. Dies hat den Vorteil, dass die Flüssigkeit von der Flüssigkeitsversorgungseinrichtung mit einer verbesserten Gleichmäßigkeit abgenommen werden kann, so dass die Belastung der Flüssigkeitsversorgungseinrichtung durch Druckimpulse klein gehalten werden kann. Die Düsen können bei dieser Betriebsweise die Flüssigkeit zeitversetzt ausgeben, wobei Überschneidungen durchaus zulässig sind.

Vorzugsweise ist der Befeuchtungsstrecke ein mit der Steuereinrichtung verbundener erster Sensor zur Ermittlung einer Feuchtkugeltemperatur des Luftstroms vorgeschaltet und ein zweiter Sensor zur Ermittlung einer Ist-Temperatur des Luftstroms ist der Befeuchtungsstrecke nachgeschaltet, wobei die Steuereinrichtung die Düsenanordnung so steuert, dass die Ist-Temperatur mit der Feuchtkugeltemperatur plus einer vorbestimmten Differenz übereinstimmt. Eine derartige Regelung ist bei der Befeuchtung von Abluft von Vorteil, weil es hiermit auf relativ einfache Weise möglich ist, Restwasser zu vermeiden oder klein zu halten. Restwasser ist der Anteil des Wassers, der nicht in dem Luftstrom verdunstet. Man ermittelt die Feuchtkugeltemperatur vor der Befeuchtungsstrecke. Die Feuchtkugeltemperatur, die auch als "Kühlgrenztemperatur" bezeichnet wird, ist die tiefste Temperatur, die sich durch Verdunstungskühlung erreichen lässt. Aufgrund der Verdunstungskälte liegt die Kühlgrenztemperatur oder Feuchtkugeltemperatur in Abhängigkeit von der relativen Luftfeuchte unterhalb der gemessenen Lufttemperatur. Die Feuchtkugeltemperatur kann beispielsweise durch eine psychrometrische Messung ermittelt werden. Die Befeuchtung wird nun durch die Steuereinrichtung so gesteuert, dass die Ist-Temperatur hinter der Befeuchtungsstrecke gleich der Feuchtkugeltemperatur oder geringfügig höher als die Feuchtkugeltemperatur ist. Damit wird es möglich, eine relativ große Feuchtemenge in den Luftstrom einzutragen, ohne dass man zur Vermeidung eines Flüssigkeitsüberschusses die Luftfeuchte hinter der Befeuchtungsstrecke ermitteln muss. Die Ermittlung der Luftfeuchte ist insbesondere bei hohen relativen Luftfeuchten mit einem relativ hohen Aufwand verbunden. Dieser Aufwand kann durch den Vergleich der Ist-Temperatur mit der Feuchtkugeltemperatur vermieden oder klein gehalten werden,

In einer alternativen Ausgestaltung ist es von Vorteil, wenn der Befeuchtungsstrecke eine Heizeinrichtung vorgeschaltet ist, die den Luftstrom auf eine konstante Enthalpie erwärmt. Dies ist insbesondere bei der Befeuchtung der Zuluft von Vorteil. Die Düsenanordnung kann dann beispielsweise über die spezifische Feuchte geregelt werden. Die spezifische Feuchte, die die Masse der Flüssigkeit im Verhältnis zur Masse der Luft angibt, lässt sich auf relativ einfache Weise einstellen. Beispielsweise kann eine konstante Masse Flüssigkeit pro Masse Luft zugegeben werden.

Vorzugsweise sind der Befeuchtungsstrecke ein Aerosolabscheider und/oder ein Tropfenabscheider nachgeschaltet Der oder die Abscheider sind vor allem beim Anfahren der Luftbefeuchtungsanordnung von Vorteil, weil sich hier unter Umständen noch Aerosole oder Tropfen bilden können, also nicht verdampfte Flüssigkeit. Aerosole werden im Aerosolabscheider herausgefiltert. Tropfen werden im Tropfenabscheider herausgefiltert. Sollten sich im Aerosolabscheider Aerosole zu größeren Tropfen zusammenfügen und dann von dem Luftstrom mitgerissen werden, sorgt der Tropfenabscheider dafür, dass auch diese herausgefiltert werden. Wenn also ein Aerosolabscheider und ein Tropfenabscheider gemeinsam verwendet werden, ist es von Vorteil, wenn der Tropfenabscheider in Richtung des Luftstroms hinter dem Aerosolabscheider angeordnet ist.

Die Aufgabe wird bei einem Verfahren der eingangs genannten Art dadurch gelöst, dass die Düsen pulsbreitenmoduliert angesteuert werden.

Wie oben im Zusammenhang mit der Luftbefeuchtungsanordnung erläutert worden ist, hat man auf diese Weise mehrere Möglichkeiten, die ausgebrachte Flüssigkeitsmenge zu steuern. Zum einen lässt sich sozusagen eine Grundmenge dadurch steuern, dass man eine Sprühgruppe oder mehrere Sprühgruppen gemeinsam zur Ausgabe der Flüssigkeit in den Luftstrom verwendet. Zum anderen kann man bei jeder Sprühgruppe die von den Düsen ausgebrachte Flüssigkeitsmenge dadurch verändern, dass man die Düsen, beispielsweise ein den Düsen vorgeschaltetes Ventil oder die jeweilige Sprühgruppe insgesamt, pulsbreitenmoduliert steuert, so dass in einem Takt einer vorbestimmten zeitlichen Länge nur über einen Teil des Taktes Flüssigkeit ausgegeben wird. Dieser Teil kann beispielsweise im Bereich von 10 % bis 100 % der Taktlänge liegen. Es ist also eine relativ genaue Steuerung der ausgegebenen Flüssigkeit möglich.

Vorzugsweise werden mindestens zwei Sprühgruppen mit unterschiedlichen Sprühleistungen verwendet. Wenn nur eine kleinere Flüssigkeitsmenge ausgegeben werden soll, verwendet man eine Sprühgruppe mit einer kleineren Sprühleistung, wobei diese Sprühleistung dann noch durch die oben angegebene Pulsbreitenmodulation relativ fein gesteuert werden kann. Wenn eine größere Menge an Flüssigkeit ausgegeben werden soll, dann verwendet man eine Sprühgruppe mit einer größeren Sprühleistung oder mehrere Sprühgruppen zusammen.

Vorzugsweise werden Düsen zu unterschiedlichen Zeiten angesteuert. Dies hält die Belastung der Druckwelle oder der Flüssigkeitsversorgung klein. Darüber hinaus wird auch die Steuerleistung klein gehalten.

Vorzugsweise werden vor dem Befeuchten einer Feuchtkugeltemperatur des Luftstroms und nach dem Befeuchten eine Ist-Temperatur des Luftstroms ermittelt, wobei die Befeuchtung durch die Düsenanordnung so gesteuert wird, dass die Ist-Temperatur mit der Feuchtkugeltemperatur plus einer vorbestimmten Differenz übereinstimmt. Die Feuchtkugeltemperatur lässt sich relativ einfach ermitteln. Auch die Ermittlung der Ist-Temperatur ist ohne Probleme möglich. Durch den Vergleich der Ist-Temperatur mit der Feuchtkugeltemperatur lässt sich dann feststellen, ob die in den Luftstrom eingebrachte Flüssigkeitsmenge ausreicht oder ob sie verändert werden muss. Die vorbestimmte Differenz zur Feuchtkugeltemperatur kann relativ klein gemacht werden. Sie dient als "Sicherheitsabstand", so dass man ein Zuviel an eingespeister Flüssigkeit vermeiden kann. Wenn die Ist-Temperatur größer als die Feuchtkugeltemperatur plus der vorbestimmten Differenz ist, muss die in den Luftstrom eingespeiste Flüssigkeitsmenge vergrößert werden.

Vorzugsweise wird der Luftstrom vor dem Befeuchten auf eine konstante Enthalpie erwärmt und die Befeuchtung des Luftstroms wird über die spezifische Feuchte des Luftstroms geregelt. So kann man beispielsweise den Energiegehalt des Luftstroms vor der Befeuchtung auf eine konstante Enthalpie von 30 bis 35 kJ/kg erwärmen. Bei der Regelung über die spezifische Feuchte kann man dann einen Sollwert der spezifischen Feuchte von beispielsweise 7 g/kg verwenden. Durch den adiabatischen Verdunstungsprozess kommt es zu einer Abkühlung der Luft des Luftstroms. Gegebenenfalls kann eine Nacherwärmung erforderlich werden.

Die Erfindung wird im Folgenden anhand von bevorzugten Ausführungsbeispielen in Verbindung mit der Zeichnung beschrieben. Hierin zeigen:
- Fig. 1: eine schematische Darstellung einer Luftbefeuchtungsanordnung zur Zuluftbefeuchtung,
- Fig. 2: eine vergrößerte Einzelheit II aus Fig. 1,
- Fig. 3: eine schematische Darstellung einer Luftbefeuchtungsanordnung zur Abluftbefeuchtung und
- Fig. 4: eine vergrößerte Darstellung einer Einzelheit IV aus Fig. 3.

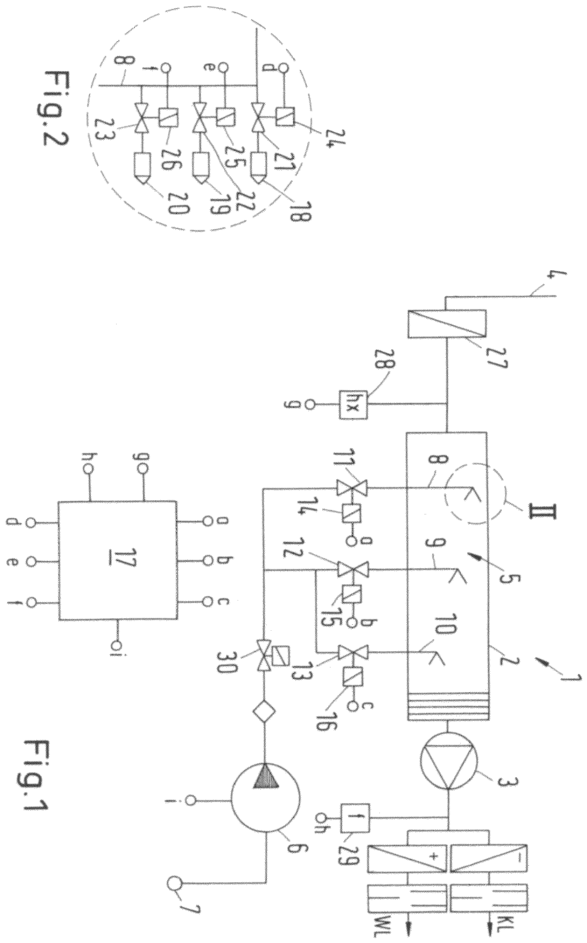

Fig. 1 zeigt schematisch eine Luftbefeuchtungsanordnung 1 mit einer Befeuchterstrecke 2, einer Luftstromerzeugungseinrichtung 3, die beispielsweise als Ventilator ausgebildet ist und einen Luftstrom von einem Einlass 4 durch die Befeuchterstrecke 2 saugt. Im Bereich der Befeuchterstrecke 2 ist eine Düsenanordnung 5 angeordnet. Die Düsenanordnung 5 wird weiter unten näher beschrieben. Die Düsenanordnung 5 wird durch eine Flüssigkeitsversorgungseinrichtung gespeist, die eine Hochdruckpumpe 6 aufweist, die Flüssigkeit, beispielsweise Wasser, aus einer Quelle 7 entnimmt und der Düsenanordnung 5 zuführt. Die Quelle 7 kann beispielsweise ein Trinkwassernetz sein. Die Hochdruckpumpe 6 arbeitet beispielsweise in einem Drehzahlbereich von 1.000 bis 3.000 Umdrehungen pro Minute und erzeugt einen Druck im Bereich von 30 bis 90 bar. Der Druck der Hochdruckpumpe 6 ist auf die Düsenanordnung 5 so abgestimmt, dass die Düsenanordnung 5 die eingespeiste Flüssigkeit, beispielsweise Wasser, zu einem Aerosol zerstäubt. Das Aerosol besteht aus sehr kleinen Tröpfchen, wobei die Mehrzahl der Tröpfchen einen Durchmesser kleiner als 60 µm und vorzugsweise kleiner als 30 µm aufweist.

Die Düsenanordnung 5 weist mindestens zwei Sprühgruppen auf. Im vorliegenden Fall sind drei Sprühgruppen 8, 9, 10 vorgesehen. Jede Sprühgruppe ist durch ein Ventil 11-13 einzeln an- und abschaltbar. Dies bedeutet, dass jede Sprühgruppe 8-10 unabhängig von den jeweils anderen Sprühgruppen 8-10 mit der Hochdruckpumpe 6 verbunden werden kann. So kann man beispielsweise einen Betrieb realisieren, bei dem nur eine Sprühgruppe 8 in Betrieb ist, die anderen beiden Sprühgruppen 9, 10 jedoch keine Flüssigkeit ausgeben. Es ist auch möglich, eine andere Sprühgruppe 9 mit der Hochdruckpumpe 6 zu verbinden und die verbleibenden Sprühgruppen 8, 10 von der Hochdruckpumpe 6 zu trennen. Es ist auch möglich, eine beliebige Kombination von Sprühgruppen 8, 9, 10 gemeinsam mit der Hochdruckpumpe 6 zu verbinden und gegebenenfalls eine verbleibende Sprühgruppe von der Hochdruckpumpe 6 zu trennen. Die Ventile 11-13 sind also als Auf-Zu-Ventile ausgebildet. Jedes Ventil 11-13 weist einen Ventilantrieb 14, 15, 16 auf. Jeder Ventilantrieb 14, 15, 16 ist mit einer Steuereinrichtung 17 verbunden. Aus Gründen der Übersicht sind Leitungen zwischen den Ventilantrieben 14-16 und der Steuereinrichtung 17 nicht dargestellt. Dargestellt sind Anschlüsse a, b, c der Ventilantriebe 14-16, die mit entsprechenden Anschlüssen a, b, c der Steuereinrichtung 17 verbunden sind.

Wie in Fig. 2 zu erkennen ist, weist jede Sprühgruppe 8-10 mindestens eine Düse 18, 19, 20 auf, die hier nur für die Sprühgruppe 8 dargestellt sind. Die anderen beiden Sprühgruppen 9, 10 können ebenfalls mehrere Düsen aufweisen, auch wenn dies nicht noch einmal dargestellt ist.

Die Düsen 18-20 sind über jeweils ein Düsenventil 21-23 mit dem Ventil 11 verbunden. Jedes Düsenventil 21-23 weist einen eigenen Düsenventilantrieb 24-26 auf. Auch die Düsenventile 21-23 können als Auf-Zu-Ventile ausgebildet sein. Die Düsenventilantriebe 24-26 sind ebenfalls mit der Steuereinrichtung 17 verbunden. Auch hier sind aus Gründen der Übersicht die Leitungen weggelassen. Es sind vielmehr Anschlüsse d, e, f an den Düsenventilantrieben 24-26 dargestellt, die mit entsprechenden Anschlüssen d, e, f an der Steuereinrichtung 17 verbunden sind.

Die einzelnen Sprühgruppen 8, 9, 10 haben unterschiedliche Sprühleistungen. Die Sprühleistungen aller Sprühgruppen 8-10 decken zusammen 100 % des möglichen Bedarfs. Eine der Sprühgruppen, beispielsweise die Sprühgruppe 8, deckt beispielsweise maximal 10 % des möglichen Bedarfs. Die Sprühgruppe 9 kann beispielsweise 30 % des möglichen Bedarfs decken und die Sprühgruppe 10 60 % des möglichen Bedarfs.

Der Befeuchterstrecke vorgeschaltet ist eine Heizeinrichtung 27. Zwischen der Heizeinrichtung 27 und der Befeuchterstrecke 2 ist ein Enthalpiesensor 28 angeordnet, der die Enthalpie des Luftstroms durch die Befeuchterstrecke 2 misst. Hinter der Luftstromerzeugungseinrichtung 3 ist ein Feuchtesensor 29 angeordnet.

Weiterhin sind ein Kaltluftkanal KL und ein Warmluftkanal WL dargestellt, die an sich bekannt sind und vorliegend nicht weiter beschrieben werden.

Der Enthalpiesensor 28 ist mit der Steuereinrichtung 17 verbunden. Hierzu ist eine Leitung zwischen den Anschlüssen g am Enthalpiesensor 28 und an der Steuereinrichtung 17 vorgesehen. In ähnlicher Weise ist der Feuchtesensor 29 mit seinem Anschluss h mit einem Anschluss h an der Steuereinrichtung 17 verbunden. Die Steuereinrichtung 17 weist einen weiteren Anschluss i auf, der mit einem Steueranschluss i an der Hochdruckpumpe 6 verbunden ist. Die Steuereinrichtung 17 ist also auch in der Lage, die Hochdruckpumpe 6 in gewissen Grenzen zu steuern.

Ein Absperrventil 30 ist zwischen der Hochdruckpumpe 6 und den Sprühgruppen 8-10 angeordnet, um die Luftbefeuchtungsanordnung 1 komplett außer Betrieb zu nehmen.

Die Steuereinrichtung 17 steuert die Luftbefeuchtungsanordnung 1 durch eine Kombination von zwei Einflussgrößen. Zum einen steuert die Steuereinrichtung 17 individuell jede Sprühgruppe 8-10. Die Steuereinrichtung 17 kann also jedes Ventil 11-13 öffnen oder schließen, so dass jede Sprühgruppe 8-10 Flüssigkeit in Form von Aerosol in die Befeuchterstrecke 2 ausstoßen kann oder nicht. Wenn also nur wenig Feuchtigkeit benötigt wird, wird lediglich die Sprühgruppe 8 in Betrieb genommen, deren Sprühleistung auf 10 % der maximal erforderlichen Sprühleistung begrenzt ist. Wenn mehr Feuchtigkeit erforderlich ist, können weitere Sprühgruppen 9, 10 in Betrieb genommen werden.

Zusätzlich steuert die Steuereinrichtung 17 die einzelnen Sprühgruppen 8-10 durch Pulsbreitenmodulation. Im vorliegenden Ausführungsbeispiel kann sogar jede Düse 18-20 durch die Ansteuerung der Düsenventilantriebe 24-26 pulsbreitenmoduliert betrieben werden. In vielen Fällen reicht es aber auch aus, wenn eine Sprühgruppe 8 an sich pulsbreitenmoduliert gesteuert wird. In diesem Fall sind die Düsenventile 21-23 mit den Düsenventilantrieben 24-26 nicht erforderlich.

Eine pulsbreitenmodulierte Ansteuerung bedeutet, dass in einem vorgegebenen Zeitraum von beispielsweise zehn Sekunden, der im Folgenden als "Takt" bezeichnet wird, die entsprechenden Düsen 18-20 nur für einen Bruchteil dieses Taktes Flüssigkeit versprühen können. Dieser Bruchteil beträgt beispielsweise 10 % bis 100 %, so dass die Sprühzeiten der Düsen 18-20 im Bereich von einer Sekunde bis zehn Sekunden liegen. Wenn andere Taktzeiten gewählt werden, ergeben sich natürlich auch andere mögliche Sprühzeiten.

Diese Ausbildung hat den Vorteil, dass man mit der Auswahl der aktiven Sprühgruppen 8-10 zunächst eine etwas grobere Vorauswahl für die auszugebende Flüssigkeitsmenge treffen kann. Eine Feinsteuerung erfolgt dann über die Pulsbreitenmodulation (PWM = pulse width modulation). Damit lässt sich eine sehr feinfühlige Einstellung der versprühten Flüssigkeitsmenge erreichen.

Da es von Vorteil ist, wenn die Sprühzeiten an sich relativ lang sind, hat es erhebliche Vorteile, wenn eine Sprühgruppe 8 vorhanden ist, deren Sprühleistung insgesamt klein ist, so dass man auch bei einem kleinen Feuchtegrad relativ lange Sprühzeiten realisieren kann.

Die Regelung der Luftbefeuchtungsanordnung 1 erfolgt bei der Befeuchtung der Zuluft nach dem Verfahren der Enthalpieregelung. Durch die Heizeinrichtung 27 wird die Energie des Luftstroms vor der Befeuchtungsstrecke auf eine konstante Enthalpie erwärmt. Im vorliegenden Ausführungsbeispiel beträgt die Enthalpie beispielsweise 31,1 kJ/kg. Die Sprühgruppen 8-10 werden über die spezifische Feuchte geregelt, die durch den Feuchtesensor 29 ermittelt wird. Der Sollwert beträgt im vorliegenden Fall 7 g/kg. Durch den adiabatischen Verdunstungsprozess kommt es zu einer Abkühlung. Gegebenenfalls muss die Luft auf die gewünschte ZuluftTemperatur erwärmt werden.

Wenn der Luftstrom vor der Befeuchterstrecke 2 nicht die Soll-Enthalpie erreicht, wird der Sollwert für die spezifische Feuchte automatisch reduziert. Dies ist zum Beispiel während der Anlaufphase der Fall, da die Heizeinrichtung 27 einige Zeit benötigt, bis die volle Heizleistung erreicht ist. So wird verhindert, dass die relative Feuchte am Ausgang der Befeuchterstrecke 2 einen vorgegebenen Wert, beispielsweise 70 %, überschreitet und es zu einem erhöhten Anfall von Restwasser, also unverdunstetem Wasser kommt.

In nicht dargestellter Weise sind am Ende der Befeuchterstrecke 2 ein Aerosolabscheider und/oder ein Tropfenabscheider montiert. Nicht verdunstete Aerosole werden im Aerosolabscheider herausgefiltert. Sollten sich die Aerosole im Aerosolabscheider zu größeren Tropfen zusammenfügen und dann von der Luft mitgerissen werden, kann man den Tropfenabscheider dafür verwenden, dass die Tropfen herausgefiltert werden.

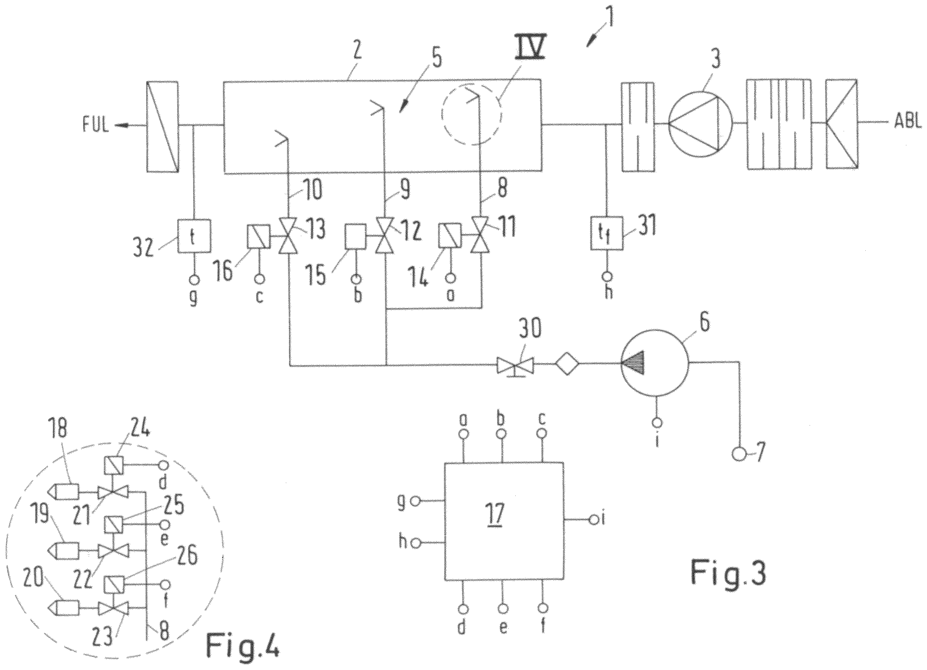

Die Fig. 3 und 4 zeigen eine abgewandelte Ausführungsform der Luftbefeuchtungsanordnung 1, bei der gleiche und einander entsprechende Elemente mit den gleichen Bezugszeichen versehen sind.

Es hat sich zunächst die Förderrichtung der Luftstromerzeugungseinrichtung 3 geändert. Die Luftstromerzeugungseinrichtung 3 fördert Abluft ABL aus einem Gebäude, die später als Fortluft FOL das Gebäude verlässt.

Auch hier sind wieder mehrere Sprühgruppen 8-10 vorgesehen, die durch die Steuereinrichtung 17 individuell steuerbar sind. Die Sprühgruppen 8-10 weisen jeweils ein Ventil 11-13 auf, die jeweils durch Ventilantriebe 14-16 betätigt werden können. Die Ventilantriebe werden durch die Steuereinrichtung 17 angesteuert.

Vor der Befeuchterstrecke 2 ist ein Feuchtkugeltemperatursensor 31 angeordnet, der die Feuchtkugeltemperatur t_{f} des von der Luftstromerzeugungseinrichtung 3 erzeugten Luftstroms ermittelt. Die Feuchtkugeltemperatur, die auch als "Kühlgrenztemperatur" bezeichnet werden kann, ist die tiefste Temperatur, die sich durch eine Verdunstungskühlung erreichen lässt. Aufgrund der Verdunstungskälte liegt die Feuchtkugeltemperatur oder Kühlgrenztemperatur unterhalb der Lufttemperatur. Der Feuchtkugeltemperatursensor 1 ermittelt also die Feuchtkugeltemperatur t_{f}, beispielsweise durch eine psychrometrische Messung mit einem Thermometer, das mit einem befeuchteten Stoff- oder Watteüberzug versehen ist. Andere Sensorarten zum Ermitteln der Feuchtkugeltemperatur sind verwendbar.

In Bewegungsrichtung des von der Luftstromerzeugungseinrichtung 3 erzeugten Luftstroms hinter der Befeuchterstrecke 2 ist ein Ist-Temperatursensor 32 angeordnet, der die Ist-Temperatur t des Luftstroms ermittelt.

Der Feuchtkugeltemperatursensor 31 bildet einen ersten Sensor und der Ist-Temperatursensor 32 bildet einen zweiten Sensor. Die beiden Sensoren 31, 32 sind ebenfalls mit der Steuereinrichtung 17 verbunden. Die Steuereinrichtung steuert die Düsenanordnung 5 so, dass die Ist-Temperatur t mit der Feuchtkugeltemperatur t_{f} plus einer vorbestimmten Differenz Δt übereinstimmt. Mit anderen Worten ist t = t_{f} + Δt.

Die Temperaturüberwachung eines Luftstroms kann mit geringerem Aufwand durchgeführt werden, als die Ermittlung der relativen oder absoluten Feuchte. Wenn man daher die Befeuchtung in Abhängigkeit von der Ist-Temperatur t und der Feuchtkugeltemperatur t_{f} vornimmt, lässt sich auf einfache Weise erreichen, dass man eine möglichst große Menge an Feuchtigkeit in der Luft versprühen kann und gleichzeitig sicherstellen kann, dass man nicht zu viel Feuchtigkeit versprüht. Wenn die Ist-Temperatur t oberhalb der Feuchtkugeltemperatur t_{f} ist, muss die versprühte Flüssigkeitsmenge erhöht werden.

Die Steuerung der versprühten Flüssigkeitsmenge erfolgt durch die Kombination aus Inbetriebnahme von einer oder mehr Sprühgruppen 8-10 und durch das pulsbreitenmodulierte Ansteuern der einzelnen Ventile 18-20 oder der Sprühgruppen 8-10.

Die Steuereinrichtung 17 kann in beiden Ausführungsbeispielen genutzt werden, um die Ventile 18-20 und/oder die Sprühgruppen 8-10 zu unterschiedlichen Zeiten anzusteuern. Überlappungen der jeweiligen Sprühzeiten sind zulässig. Auf diese Weise kann man dafür sorgen, dass die Belastung der Hochdruckpumpe 6 gleichmäßig gehalten wird.

## Patentansprüche

1. Luftbefeuchtungsanordnung (1) mit einer Befeuchterstrecke (2), einer Luftstromerzeugungseinrichtung (3) zur Erzeugung eines Luftstroms durch die Befeuchterstrecke (2), einer im Bereich der Befeuchterstrecke (2) angeordneten Düsenanordnung (5), einer Flüssigkeitsversorgungseinrichtung (6, 7), die mit der Düsenanordnung (5) verbunden ist, und einer Steuereinrichtung (17), die eine Versorgung der Düsenanordnung (5) mit Flüssigkeit steuert, wobei die Düsenanordnung (5) mindestens zwei Sprühgruppen (8-10) mit jeweils mindestens einer Düse (18-20) aufweist, und jede Sprühgruppe (8-10) individuell ansteuerbar ist, **dadurch gekennzeichnet, dass** die Düsen (18-20) pulsbreitenmoduliert gesteuert sind.

2. Luftbefeuchtungsanordnung nach Anspruch 1, **dadurch gekennzeichnet, dass** mindestens zwei Sprühgruppen (8-10) unterschiedliche Sprühleistungen aufweisen.

3. Luftbefeuchtungsanordnung nach Anspruch 1 oder 2, **dadurch gekennzeichnet, dass** die Steuereinrichtung (17) mindestens zwei Düsen (18-20) zu unterschiedlichen Zeiten ansteuert.

4. Luftbefeuchtungsanordnung nach einem der Ansprüche 1 bis 3, **dadurch gekennzeichnet, dass** der Befeuchtungsstrecke ein mit der Steuereinrichtung verbundener erster Sensor (31) zur Ermittlung einer Feuchtkugeltemperatur (t_{f}) des Luftstroms vorgeschaltet und ein zweiter Sensor (32) zur Ermittlung einer Ist-Temperatur (t) des Luftstroms nachgeschaltet ist, wobei die Steuereinrichtung (17) die Düsenanordnung (5) so steuert, dass die Ist-Temperatur (t) mit der Feuchtkugeltemperatur (t_{f}) plus einer vorbestimmten Differenz übereinstimmt.

5. Luftbefeuchtungsanordnung nach einem der Ansprüche 1 bis 3, **dadurch gekennzeichnet, dass** der Befeuchtungsstrecke (2) eine Heizeinrichtung (27) vorgeschaltet ist, die den Luftstrom auf eine konstante Enthalpie erwärmt.

6. Luftbefeuchtungsanordnung nach einem der Ansprüche 1 bis 5, **dadurch gekennzeichnet, dass** der Befeuchtungsstrecke (2) ein Aerosolabscheider und/oder ein Tropfenabscheider nachgeschaltet sind.

7. Verfahren zum Befeuchten eines Luftstroms, bei dem eine durch eine Düsenanordnung (5) zerstäubte Flüssigkeit in den Luftstrom eingebracht wird, wobei eine Düsenanordnung (5) mit mindestens zwei Sprühgruppen (8-10), die jeweils mindestens eine Düse (18-20)aufweisen, verwendet wird und die Sprühgruppen (8-10) in Abhängigkeit von der gewünschten Feuchte des Luftstroms individuell angesteuert werden, **dadurch gekennzeichnet, dass** die Düsen (18-20) pulsbreitenmoduliert angesteuert werden.

8. Verfahren nach Anspruch 7, **dadurch gekennzeichnet, dass** mindestens zwei Sprühgruppen (8-10) mit unterschiedlichen Sprühleistungen verwendet werden.

9. Verfahren nach Anspruch 7 oder 8, **dadurch gekennzeichnet, dass** Düsen (18-20) zu unterschiedlichen Zeiten angesteuert werden.

10. Verfahren nach einem der Ansprüche 7 bis 9, **dadurch gekennzeichnet, dass** vor dem Befeuchten eine Feuchtkugeltemperatur (t_{f}) des Luftstroms und nach dem Befeuchten ein Ist-Temperatur (t) des Luftstroms ermittelt werden, wobei die Befeuchtung durch die Düsenanordnung (5) so gesteuert wird, dass die Ist-Temperatur (t) mit der Feuchtkugeltemperatur (t_{f}) plus einer vorbestimmten Differenz übereinstimmt.

11. Verfahren nach einem der Ansprüche 7 bis 9, **dadurch gekennzeichnet, dass** der Luftstrom vor dem Befeuchten auf eine konstante Enthalpie erwärmt wird und die Befeuchtung des Luftstroms über die spezifische Feuchte des Luftstroms geregelt wird.

## Claims

1. Air humidification arrangement (1) comprising a humidifier section (2), an air flow generation device (3) for generating an air flow through the humidifier section (2), a nozzle arrangement (5) which is arranged in the region of the humidifier section (2), a liquid supply device (6, 7) which is connected to the nozzle arrangement (5), and a controller (17) which controls the supply of liquid to the nozzle arrangement (5), the nozzle arrangement (5) comprising at least two spray groups (8-10) which each have at least one nozzle (18-20), and every spray group (8-10) being individually actuatable, **characterised in that** the nozzles (18-20) are controlled by pulse-width modulation.

2. Air humidification arrangement according to claim 1, **characterised in that** at least two spray groups (8-10) have different spray outputs.

3. Air humidification arrangement according to either claim 1 or claim 2, **characterised in that** the controller (17) actuates at least two nozzles (18-20) at different times.

4. Air humidification arrangement according to any of claims 1 to 3, **characterised in that** a first sensor (31) which is connected to the controller and is intended for detecting a wet-bulb temperature (t_{f}) of the air flow is installed upstream of the humidifier section and a second sensor (32) intended for detecting an actual temperature (t) of the air flow is installed downstream of the humidifier section, the controller (17) controlling the nozzle arrangement (5) such that the actual temperature (t) is equal to the wet-bulb temperature (t_{f}) plus a predetermined difference.

5. Air humidification arrangement according to any of claims 1 to 3, **characterised in that** a heating device (27) which heats the air flow to a constant enthalpy is installed upstream of the humidifier section (2).

6. Air humidification arrangement according to any of claims 1 to 5, **characterised in that** an aerosol collector and/or a mist collector are installed downstream of the humidifier section (2).

7. Method for humidifying an air flow, in which a liquid which is atomised by means of a nozzle arrangement (5) is introduced into the air flow, a nozzle arrangement (5) which has at least two spray groups (8-10), which each comprise at least one nozzle (18-20), being used and the spray groups (8-10) being individually actuated depending on the desired humidity of the air flow, **characterised in that** the nozzles (18-20) are controlled by pulse-width modulation.

8. Method according to claim 7, **characterised in that** at least two spray groups (8-10) having different spray outputs are used.

9. Method according to either claim 7 or claim 8, **characterised in that** nozzles (18-20) are actuated at different times.

10. Method according to any of claims 7 to 9, **characterised in that** a wet-bulb temperature (t_{f}) of the air flow is determined before the humidification and an actual temperature (t) of the airflow is determined after the humidification, the humidification being controlled by means of the nozzle arrangement (5) such that the actual temperature (t) is equal to the wet-bulb temperature (t_{f}) plus a predetermined difference.

11. Method according to any of claims 7 to 9, **characterised in that**, before being humidified, the air flow is heated to a constant enthalpy and the humidification of the air flow is regulated by the specific humidity of the air flow.

## Revendications

1. Disposition d'humidification d'air (1) avec une portion d'humidificateur (2), un dispositif de génération de flux d'air (3) pour la génération d'un flux d'air à travers le trajet d'humidification (2), une disposition à buse (5) disposée au niveau de la portion d'humidificateur (2), un dispositif d'alimentation en liquide (6, 7), qui est relié avec la disposition à buse (5) et un dispositif de commande (17) qui commande une alimentation de la disposition à buse (5) en liquide, la disposition à buse (5) comprenant au moins deux groupes de pulvérisation (8-10) avec chacun au moins une buse (18-20) et chaque groupe de pulvérisation (8-10) pouvant être contrôlé individuellement, **caractérisé en ce que** les buses (18-20) sont contrôlées par modulation de largeur d'impulsions.

2. Disposition d'humidification d'air selon la revendication 1, **caractérisé en ce qu'**au moins deux groupes de pulvérisation (8-10) présentent des puissances de pulvérisation différentes.

3. Disposition d'humidification d'air selon la revendication 1 ou 2, **caractérisé en ce que** le dispositif de commande (17) commande au moins deux buses (18-20) à des moments différents.

4. Disposition d'humidification d'air selon l'une des revendications 1 à 3, **caractérisé en ce qu'**un premier capteur (31), relié avec le dispositif de commande, pour la détermination d'une température de bulbe humide (t_{f}) du flux d'air est branché en amont de la portion d'humidificateur et un deuxième capteur (32), pour la détermination d'une température effective (t) du flux d'air est branché en aval, le dispositif de commande (17) contrôlant la disposition à buse (5) de façon à ce que la température effective (t) coïncide avec la température de bulbe humide (t_{f}) plus une différence prédéterminée.

5. Disposition d'humidification d'air selon l'une des revendications 1 à 3, **caractérisé en ce que**, en amont de la portion d'humidificateur (2), est branché un dispositif de chauffage (27) qui chauffe le flux d'air jusqu'à une enthalpie constante.

6. Disposition d'humidification d'air selon l'une des revendications 1 à 3, **caractérisé en ce qu'**un séparateur d'aérosol et/ou un séparateur de gouttes est branché en aval de la portion d'humidificateur (2).

7. Procédé d'humidification d'un flux d'air, dans lequel une liquide pulvérisé par une disposition à buse (5) est introduit dans le flux d'air, une disposition à buse (5) avec au moins deux groupes de pulvérisation (8-10), qui comprennent chacun au moins une buse (18-20), est utilisé et les groupes de pulvérisation (8-10) sont contrôlés individuellement en fonction de l'humidité souhaitée du flux d'air, **caractérisé en ce que** les buses (18-20) sont contrôlées par une modulation de largeur d'impulsions.

8. Procédé selon la revendication 7, **caractérisé en ce qu'**au moins deux groupes de pulvérisation (8-10) avec des puissances de pulvérisation différentes sont utilisés.

9. Procédé selon la revendication 7 ou 8, **caractérisé en ce que** les buses (18-20) sont contrôlées à des moments différents.

10. Procédé selon l'une des revendications 7 à 9, **caractérisé en ce que**, avant l'humidification, une température de bulbe humide (tf) du flux d'air est déterminée et après l'humidification, une température effective (t) du flux d'air est déterminée. l'humidification étant contrôlée par la disposition à buses (5) de façon à ce que la température effective (t) coïncide avec la température de bulbe humide (tf) plus une différence prédéterminée.

11. Procédé selon l'une des revendications 7 à 9, **caractérisé en ce que** le flux d'air est chauffé, avant l'humidification, jusqu'à une enthalpie constante et l'humidification du flux d'air est régulée grâce à l'humidité spécifique du flux d'air.
